# EUROPÄISCHE PATENTSCHRIFT

(11) **EP 0 497 118 B1**
(45) Veröffentlichungstag und Bekanntmachung des Hinweises auf die Patenterteilung: **01.03.1995**
(21) Anmeldenummer: 92100375.2
(22) Anmeldetag: 11.01.1992
(51) Int. Cl.: B62D 1/19

(54) **Lenkwelle für Kraftfahrzeuge**
Steering column for motor vehicles
Colonne de direction pour véhicules à moteur

(30) Priorität: 29.01.1991 DE 4102516
(43) Veröffentlichungstag der Anmeldung: 05.08.1992
(73) Patentinhaber: ETABLISSEMENT SUPERVIS, FL-9490 Vaduz (LI)
(72) Erfinder: Boersma, Sape Josef, A-6712 Bludesch (AT)
(74) Vertreter: Hefel, Herbert, Dipl.-Ing.

(56) Entgegenhaltungen:
- EP-A- 0 162 141
- DE-A- 1 927 173
- DE-A- 2 032 121
- FR-A- 510 291
- FR-A- 2 118 275
- GB-A- 2 231 312
- US-A- 4 133 220
- US-A- 4 730 508

## Beschreibung

Die Erfindung bezieht sich auf eine Lenkwelle für Kraftfahrzeuge mit mindestens zwei Wellenschäften mit den Merkmalen des Oberbegriffes des Patentanspruches 1.

Eine Lenkwelle dieser Art ist aus der US-PS 4 730 508 bekannt.

Ferner sind hier jene Lenkwellen für Kraftfahrzeuge zu erwähnen, deren eines Ende mit einem Lenkgetriebe und deren anderes Ende mit einem Lenkrad verbunden sind, konstruktiv so zu gestalten, daß sich die Lenkwelle bei einer unfallbedingten Achsialbelastung verkürzt. Bei einer bekannten Konstruktion dieser Art (US-PS 4 572 022) besteht die Lenkwelle aus einem als Rohrstück ausgebildeten Wellenschaft und einem von diesem Rohrstück teleskopartig aufgenommenen profilierten Wellenschaft, wobei das Rohrstück in seinem den Wellenschaft überlappenden Bereich Dellen aufweist, die in achsparallel verlaufende Nuten oder Rinnen des profilierten Wellenschaftes eingreifen und unter Vorspannung an diesen anliegen. Die Nuten-Dellen-Verbindung sichert die beiden Wellenschäfte gegen radiale Verdrehung, die erwähnte. Vorspannung stellt sicher, daß sich die beiden Wellenschäfte erst dann achsial gegeneinander im Sinne einer Verkürzung der Lenkwelle verschieben, wenn durch eine unfallbedingte Achsialbeanspruchung die durch die Vorspannung erzielte Haltekraft zwischen den beiden Wellenschäften überwunden wird. Solche Lenkwellen haben sich bei relativ leichten Unfällen bewährt, da auch nach einer unfallbedingten Verkürzung der Lenkwelle das Fahrzeug immer noch lenkbar blieb. Bedingt durch den konstruktiven Aufbau des vor dem Fahrer des Kraftfahrzeuges liegenden Teiles des Kraftfahrzeuges, in der Regel handelt es sich um den Motorraum, ist der Verschiebeweg der beiden Wellenschäfte der Lenksäule allerdings beschränkt mit der Folge, daß bei schweren Unfällen eine Verletzungsgefahr durch die in den Führerraum eindringende, wenn auch verkürzte Lenksäule nicht auszuschließen war. Es ist daher zweckmäßig, eine Lenksäule dieser Art mit einem zusätzlichen Sicherungselement auszustatten, nämlich die einander zugewandten Endabschnitte zweier Wellenschäfte nebeneinander liegend anzuordnen und sie abzukröpfen und an diesen Endabschnitten einander überlappende Flansche zu befestigen, welche in den einander überlappenden Bereichen mit aus makromolekularen Materialien gefertigten Büchsen bestückte Bohrungen aufweisen, in welche am anderen Flansch befestigte Führungsbolzen ragen, welche mit ihrem freien Ende gegenüber dem die Bohrungen aufweisenden Flansch vorstehen. Dadurch läßt sich eine Lenkwelle dieser Art bei einer unfallbedingten Beanspruchung in einem ganz erheblichen Ausmaß zusammenschieben und damit verkürzen, allerdings mit der Folge, daß das Fahrzeug in der Folge nicht mehr lenkbar ist.

Eine Lenkwelle mit solchen Bauelementen ist aus der eingangs genannten US-PS 4 730 508 bekannt. Auch die US-PS 4 156 372 und US-PS 4 133 220 zeigen vergleichbare Konstruktionen. Die Führungsbolzen, die über ihre Länge einen gleichbleibenden Durchmesser aufweisen, sind dabei von Buchsen aufgenommen, die aus makromolekularen Werkstoffen bestehen, beispielsweise aus Gummi oder aus Kunststoffen, die die Aufgabe haben, einerseits als Dämpfungsglied zu wirken und andererseits die eingestellten Reibungswerte über lange Zeitwerte hindurch möglichst konstant zu halten, so daß die gewählten Auslösedaten möglichst über die gesamte Lebensdauer des Fahrzeuges erhalten bleiben. Die Führungsbolzen überragen dabei die sie aufnehmenden Buchsen nur um ein relativ kleines Maß, so daß im Kollisionsfall schon bei nur geringer Verkürzung der Lenkwelle die in der geschilderten Weise gekuppelten Teile sich voneinander lösen mit der Folge, daß das unfallbeschädigte Fahrzeug nicht mehr lenkbar ist. Dies ist unabhängig davon, ob der eine Flansch nur Führungsbolzen und der andere nur Buchsen für diese Führungsbolzen aufweist, oder aber ob pro Flansch sowohl Führungsbolzen wie auch Buchsen vorgesehen sein sollten. Ist im Kollisionsfall die Haftreibung zwischen Führungbolzen und Buchse überwunden, so ist in der Folge auf dem gesamten Verschiebewege ein gleichmäßiger Gleitreibungswiderstand zu überwinden.

Des weiteren ist bei einer Lenkwelle dieser Art bekannt (DE-OS 19 27 173), den einen Wellenschaft im Flansch des anderen Wellenschaftes zu führen. Dadurch soll vermieden werden, daß die nach Lösen der Kupplung frei werdenden Wellenschäfte sich unkontrolliert bewegen und dabei zusätzlichen Schaden anrichten. Dies wird zwar durch den bekannten Vorschlag im wesentlichen erreicht, jedoch ist auch in diesem Falle bereits bei geringer Verkürzung der Lenkwelle das Fahrzeug nicht mehr lenkbar.

Von diesem Stand der Technik geht nun die Erfindung aus. Sie zielt darauf ab, bei einer Lenkwelle der ersterwähnten Art sicherzustellen, daß nicht bereits bei geringer, unfallbedingter Beanspruchung die Verbindung der Wellenschäfte gelöst und in der Folge das Fahrzeug nicht mehr lenkbar wird, bevor sich die Lenkwelle überhaupt verkürzt hat. Die Erfindung löst diese Aufgabe durch jene Maßnahme, die Gegenstand und Inhalt des kennzeichnenden Teiles des Patentanspruches 1 ist. Dank dieser Maßnahme ist sichergestellt, daß sich bei geringer unfallbedingter Belastung die Lenkwelle verkürzt, bevor so große Kräfte auftreten, die die erwähnten Anschläge abzureißen imstande sind, wodurch die Verbindung der Wellenschäfte gelöst wird. Ist die Lenkwelle jedoch aus Wellenschäften gebildet, welche an sich nicht verkürzbar sind, so ist nach einem weiteren Merkmal der Erfindung jene Maßnahme vorgesehen, die Gegenstand und Inhalt des kennzeichnenden Teiles des Patentanspruches 3 sind. Eine Lenkwelle dieser Art ist dadurch insofern verbessert, als nach einer ersten Verkürzung der Lenkwelle im Kollisionsfall das Fahrzeug trotzdem noch lenkbar bleibt und nach Überwindung der Haftreibung zwischen Führungsbolzen und Buchse für die weitere Verkürzung praktisch kein nennenswerter Kraftaufwand bzw. nur ein mit zunehmender Verkürzung abnehmender Kraftaufwand erforderlich ist. Erst bei besonders schwerwiegender und folgereicher Kollision löst sich die Kupplung zwischen den Wellenschäften zur Gänze, wobei die erwähnten Anschläge abgerissen werden.

Zwei Ausführungsbeispiele der Erfindung werden anhand der Zeichnung näher erläutert. Es zeigen:

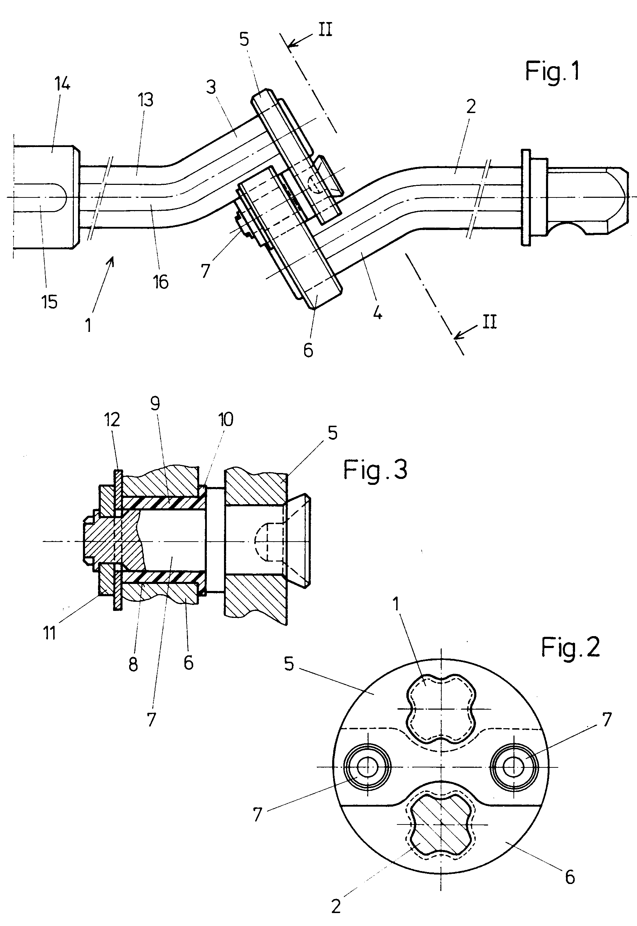

- Fig. 1: eine Ansicht der für die Erfindung wesentlichen Teile einer ersten Lenkwelle;
- Fig. 2: einen Schnitt nach der Linie II - II in Fig. 1;
- Fig. 3: einen Detaillängsschnitt durch den Führungsbolzen und die ihn aufnehmende Buchse in einem gegenüber den anderen Figuren vergrößerten Maßstab;
- Fig. 4: eine Ansicht der für die Erfindung wesentlichen Teile einer zweiten Lenkwelle;
- Fig. 5: einen Schnitt nach der Linie V - V in Fig. 4;
- Fig. 6: einen Schnitt nach der Linie VI - VI in Fig. 4;
- Fig. 7: einen Detaillängsschnitt durch den Führungsbolzen und die ihn aufnehmende Buchse in einem gegenüber den anderen Figuren vergrößerten Maßstab.

In beiden Ausführungsbeispielen sind gleiche Teile mit gleichen Hinweisziffern ausgestattet.

Die beiden Wellenschäfte 1 und 2, die in achsialer Richtung aufeinanderfolgend angeordnet sind, besitzen einander zugewandte, abgewinkelte oder abgekröpfte Endabschnitte 3 und 4, die nebeneinander liegen. An diesen Endabschnitten 3 und 4 sind Flansche 5 und 6 befestigt, welche einander zum Teil überlappen. Im Überlappungsbereich des einen Flansches 5 sind Führungsbolzen 7 paarweise befestigt. Diese Führungsbolzen 7 des Flansches 5 durchsetzen Bohrungen 8, die im überlappenden Bereich des anderen Flansches 6 ausgespart sind. Diese Bohrungen 8 sind mit Buchsen 9 bestückt, die aus makromolekularem Material, beispielsweise aus Kunststoff gefertigt sind und die an ihrer dem Flansch 5 zugewandten Seite einen Haltebund 10 tragen, der die Montage erleichtert.

Der Außendurchmesser des Führungsbolzens 7 in diesem von der Buchse 9 aufgenommenen Teil und der Innendurchmesser der Buchse 9 sind so bemessen, daß zwischen diesen gepaarten Teilen ein Preßsitz vorliegt. Die Toleranzen dieses Preßsitzes sind dabei so gewählt, daß die spezifische Flächenpressung der aneinander liegenden Flächen unter jenem Wert liegt, der zum Fließen des Werkstoffes der Büchse 9 führen könnte.

Auf den gegenüber dem Flansch 6 um ein geringes Maß vorstehenden Teil des Führungsbolzens 7 ist eine scheibenförmige Zwischenlage 12 aus makromolekularem Werkstoff aufgesteckt, an der unmittelbar eine Scheibe 11 als Anschlag anliegt. Zur Fixierung dieser Scheiben 11 sind die Stirnseiten der Führungsbolzen 7 verstemmt.

Der Wellenschaft 1 ist zweiteilig als Teleskop ausgebildet. Der eine Teil 13 ist durch einen profilierten Stab gebildet, der andere Teil durch ein Rohrstück 14, das eingedrückte Dellen 15 besitzt, die unter Vorspannung in den Nuten oder Rinnen 16 des anderen Teiles 13 eingreifen.

Im Falle einer Kollision, bei der die unfallbedingten Kräfte noch relativ gering sind, verkürzt sich vorerst der Wellenschaft 1, in dem sich die Teile 13 und 14 ineinander schieben. Sind die unfallsbedingten Kräfte jedoch groß, so werden nicht nur die Teile 13 und 14 zur Verkürzung der Lenkwelle in vollem Ausmaß ineinander geschoben, sondern zusätzlich werden die als Anschläge dienenden Scheiben 11 abgeschert, wodurch die Kopplung oder Kupplung der Wellenschäfte zur Gänze gelöst wird, mit der Folge, daß das Fahrzeug allerdings nicht mehr lenkbar ist.

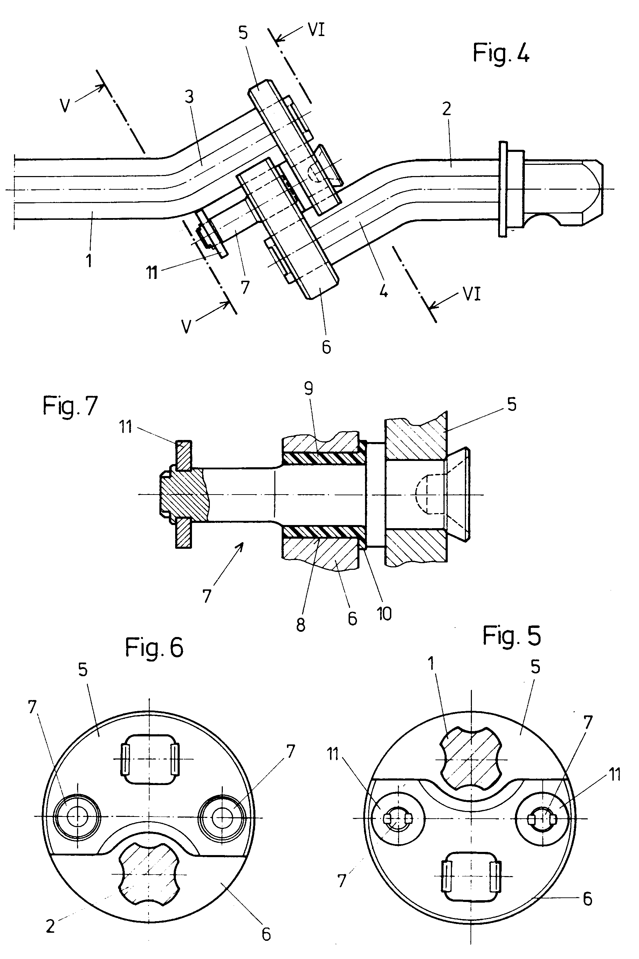

Das Ausführungsbeispiel nach den Figuren 4 bis 7 entspricht im wesentlichen dem Erstbesprochenen.

Die Wellenschäfte 1 und 2 sind jedoch von vorgegebener Länge. An ihren jeweils äußeren Enden sind jene Mittel vorgesehen, mit welchen die Lenkwelle mit dem Lenkrad bzw. mit dem Lenkgetriebe verbunden werden kann. Die Führungsbolzen 7 besitzen hier über ihre Länge Abschnitte mit unterschiedlichen Durchmessern. Der Teil des Führungsbolzens 7, der von der Buchse 9 aufgenommen ist, besitzt den größeren Durchmesser.

Der gegenüber dem Flansch 6 auskragende freie Teil des Bolzens 7 mit dem verjüngten Durchmesser ist länger als die Länge der Buchse 9. Am freien Ende dieser Führungsbolzen 7 ist je eine Scheibe 11 als Anschlag befestigt. zur Fixierung dieser Scheibe 11 sind die Stirnseiten der Führungsbolzen 7 verstemmt und die Scheibe 11 liegt an einer absatzartigen Schulter am freien Ende des Führungsbolzens 7 mit ihrer einen Seite an.

Im Falle einer Kollision, bei der die Lenkwelle nur im geringen Ausmaß verkürzt wird, verschiebt sich der Führungsbolzen 7 - bezogen auf die Fig. 7 - nach rechts, wobei nach Überwindung der Haftreibung zwischen Führungsbolzen 7 und Buchse 9 wegen der Verjüngung dieses Führungsbolzens im nachfolgenden Abschnitt nur mehr ein abnehmender Kraftaufwand notwendig ist. Die Scheibe 11, die als Anschlag dient, hält vorerst die beiden Wellenschäfte noch gekuppelt, wenn auch mit Spiel, so daß das unfallbeschädigte Fahrzeug immer noch lenkbar ist. Ist die Kollision jedoch erheblich, so daß sich die Lenkwelle stärker verkürzt, so werden die als Anschläge dienenden Scheiben 11 abgeschert und erst dadurch wird dann die Kopplung bzw. Kupplung der beiden Wellenschäfte zur Gänze gelöst.

Im gezeigten Ausführungsbeispiel sind die Führungsbolzen 7 im Flansch 5 vernietet. Der zwischen Flansch 5 und Führungsbüchse 9 vorgesehene umlaufende Flansch an diesen Führungsbolzen 7 dient nur als Montagehilfe.

Sind in den gezeigten Ausführungsbeispielen die beiden Endabschnitte 3 und 4 der Wellenschäfte 1 und 2 abgewinkelt, so ist es auch denkbar, diese Endabschnitte abzukröpfen, so daß diese die Flansche tragende Endabschnitte zumindest annähernd parallel zu den Wellenschäften verlaufen. Die vorgeschlagene erfindungsgemäße Lösung stellt eine erhebliche Verbesserung der eingangs genannten bekannten Konstruktionen dieser Art dar, damit ja all jene Zwecke erreicht werden können, die einleitend erörtert worden sind.

### Legende zu den Hinweisziffern:

- 1: Wellenschaft
- 2: Wellenschaft
- 3: Endabschnitt
- 4: Endabschnitt
- 5: Flansch
- 6: Flansch
- 7: Führungsbolzen
- 8: Bohrung
- 9: Büchse
- 10: Haltebund
- 11: Scheibe
- 12: Zwischenlage
- 13: Stab
- 14: Rohrstück
- 15: Delle
- 16: Rinne

## Patentansprüche

1. Lenkwelle für Kraftfahrzeuge mit mindestens zwei Wellenschäften (1, 2), welche bei einer unfallbedingten Achsialbelastung zur Verkürzung der Lenkwelle gegeneinander verschiebbar sind, wobei die einander zugewandten Endabschnitte (3, 4) der Wellenschäfte (1, 2) nebeneinander liegend angeordnet und abgewinkelt oder abgekröpft sind und an jedem Endabschnitt (3, 4) eines jeden Wellenschaftes (1, 2) ein Flansch (5, 6) vorgesehen ist und diese beiden Flansche (5, 6) einander überlappen, wobei der eine Flansch (6) in dem überlappten Bereich mindestens eine Bohrung (8) aufweist, die mit einer aus makromolekularem Material gefertigten Büchse (9) bestückt ist, in welche ein am anderen Flansch (5) befestigter Führungsbolzen (7) ragt, welcher mit seinem freien Ende gegenüber dem die Bohrung (8) aufweisenden Flansch (6) vorsteht, dadurch gekennzeichnet, daß an den freien Enden der Führungsbolzen (7) abreißbare Anschläge angeordnet sind.

2. Lenkwelle nach Anspruch 1, dadurch gekennzeichnet, daß die abreißbaren Anschläge unmittelbar am benachbarten Flansch (6) anliegen, gegebenenfalls unter Zwischenschaltung einer aus makromolekularem Material bestehenden Zwischenlage (12).

3. Lenkwelle nach Anspruch 1, dadurch gekennzeichnet, daß der gegenüber dem Flansch (6) vorstehende Teil des Führungsbolzens (7) mindestens so lang ist, wie die von ihm durchsetzte Büchse (9) und der Durchmesser des vorstehenden Teiles des Führungsbolzens (7) kleiner ist als der Durchmesser jenes Teiles, der von der Büchse (9) aufgenommen ist.

4. Lenkwelle nach Anspruch 1, dadurch gekennzeichnet, daß zwischen der Büchse (9) und dem Führungsbolzen (7) ein Preßsitz besteht.

5. Lenkwelle nach Anspruch 4, dadurch gekennzeichnet, daß die Preßsitztoleranz so gewählt ist, daß die spezifische Flächenpressung der gepaarten Teile unterhalb jenes Wertes liegt, der zum Fließen des makromolekularen Materials der Büchse (9) führt.

6. Lenkweile nach Anspruch 1 oder 2, dadurch gekennzeichnet, daß die abreißbaren Anschläge als Scheiben (11) ausgebildet sind.

7. Lenkwelle nach Anspruch 6, dadurch gekennzeichnet, daß die Scheiben (11) durch Verstemmungen der freien Enden der Führungsbolzen (7) an diesen befestigt sind.

8. Lenkwelle nach Anspruch 1, dadurch gekennzeichnet, daß wenigstens einer der Lenkschäfte in an sich bekannter Weise teleskopartig ausgebildet ist.

## Claims

1. Steering shaft for motor vehicles, having at least two shaft spindles (1, 2) which in the case of an axial load caused by an accident can be mutually displaced to shorten the steering shaft, the mutually facing end sections (3, 4) of the shaft spindles (1, 2) being arranged next to one another and being angled off or bent off and a flange (5, 6) being provided at each end section (3, 4) of each shaft spindle (1, 2) and these two flanges (5, 6) overlapping one another, the one flange (6) having in the overlapped region at least one bore (8) which is equipped with a sleeve (9) which is produced from macromolecular material and into which there projects a guide pin (7) which is secured to the other flange (5) and which by means of its free end protrudes with respect to the flange (6) having the bore (8), characterized in that stops which can be torn off are arranged on the free ends of the guide pins (7).

2. Steering shaft according to Claim 1, characterized in that the stops which can be torn off bear directly against the adjacent flange (6), if appropriate with the interposition of an intermediate layer (12) of macromolecular material.

3. Steering shaft according to Claim 1, characterized in that the part of the guide pin (7) projecting with respect to the flange (6) is at least as long as the sleeve (9) through which it passes and the diameter of the projecting part of the guide pin (7) is smaller than the diameter of each part which is received by the sleeve (9).

4. Steering shaft according to Claim 1, characterized in that a press fit exists between the sleeve (9) and the guide pin (7).

5. Steering shaft according to Claim 4, characterized in that the press fit tolerance is chosen such that the specific surface pressure of the mating parts is below the value which results in flowing of the macromolecular material of the sleeve (9).

6. Steering shaft according to Claim 1 or 2, characterized in that the stops which can be torn off are constructed as discs (11).

7. Steering shaft according to Claim 6, characterized in that the discs (11) are secured to the guide pins (7) by caulking the free ends thereof.

8. Steering shaft according to Claim 1, characterized in that at least one of the steering shafts is constructed to be telescopic in a manner known per se.

## Revendications

1. Arbre de direction pour véhicule à moteur avec au moins deux tiges de direction (1, 2) qui peuvent coulisser l'une contre l'autre, en cas de sollicitation axiale due à un accident, pour raccourcir l'arbre de direction, les sections terminales (3, 4), tournées l'une vers l'autre, des tiges de direction (1, 2) étant disposées l'une à côté de l'autre et coudées ou recourbées et sur chaque section terminale (3, 4) de chacune des tiges de direction (1, 2) une bride (5, 6) étant prévue, ces deux brides (5, 6) se recouvrant l'une l'autre, l'une des brides (6) présentant, dans la zone de recouvrement, au moins un perçage (8) muni d'une douille (9) réalisée en une matière macromoléculaire, douille dans laquelle pénètre un axe de guidage (7) fixé sur l'autre bride (5), qui fait saillie par son extrémité libre par rapport à la bride (6) présentant le perçage (8), arbre de direction caractérisé en ce que sur les extrémités libres des axes de guidage (7) sont disposées des butées qui peuvent être rompues.

2. Arbre de direction selon la revendication 1, caractérisé en ce que les butées qui peuvent être rompues reposent directement sur la bride voisine (6), le cas échéant avec interposition d'une rondelle intermédiaire (12) réalisée en une matière macromoléculaire.

3. Arbre de direction selon la revendication 1, caractérisé en ce que la partie saillante par rapport à la bride (6) de l'axe de guidage (7) est au moins aussi longue que la douille traversée par lui (9), et en ce que le diamètre de la partie saillante de l'axe de guidage (7) est plus petit que le diamètre de la partie qui est reçue dans la douille (9).

4. Arbre de direction selon la revendication 1, caractérisé en ce qu'entre la douille (9) et l'axe de guidage (7) il y a un ajustage serré.

5. Arbre de direction selon la revendication 4, caractérisé en ce que l'on choisit le jeu de l'ajustage serré de telle façon que la pression spécifique superficielle des parties appariées se trouve en dessous de la valeur qui conduit la matière macromoléculaire de la douille (9) à couler.

6. Arbre de direction selon la revendication 1 ou 2, caractérisé en ce que les butées arrachables sont constituées comme des rondelles (11).

7. Arbre de direction selon la revendication 6, caractérisé en ce que les rondelles (11) sont fixées sur les tiges de guidage (7) par matage des extrémités libres de celles-ci.

8. Arbre de direction selon la revendication 6, caractérisé en ce qu'au moins l'une des tiges de direction est constituée d'une manière connue en soi de façon télescopique.
